# EUROPEAN PATENT SPECIFICATION

(11) **EP 3 594 447 B1**
(45) Date of publication and mention of the grant of the patent: **28.04.2021**
(21) Application number: 19181974.7
(22) Date of filing: 24.06.2019
(51) Int. Cl.: F01D 5/14, F01D 25/16, F02C 7/36

(54) **GAS TURBINE ENGINE OUTLET GUIDE VANES**
GASTURBINENMOTORAUSTRITTSLEITSCHAUFELN
AUBES DE REDRESSEUR DE MOTEUR DE TURBINE À GAZ

(30) Priority: 13.07.2018 GB 201811491
(43) Date of publication of application: 15.01.2020
(73) Proprietor: Rolls-Royce plc, London N1 9FX (GB)
(72) Inventor: Radomski, Steven, Derby Derbyshire DE24 8BJ (GB)
(74) Representative: Rolls-Royce plc

(56) References cited:
- EP-A1- 3 187 691
- US-A1- 2005 042 083
- US-A1- 2016 194 962
- CARSTEN CLEMEN: "Aero-mechanical optimisation of a structural fan outlet guide vane", STRUCTURAL AND MULTIDISCIPLINARY OPTIMIZATION, SPRINGER, BERLIN, DE, vol. 44, no. 1, 13 January 2011 (2011-01-13), pages 125-136, XP019912193, ISSN: 1615-1488, DOI: 10.1007/S00158-010-0617-4

## Description

The present disclosure relates to outlet guide vanes (OGVs) in a gas turbine engine, and in particular to outlet guide vanes with particular ranges of relative dimensions. US2016/0194962 relates to an outlet guide vane for a turbine engine, the vane having a plurality of vane sections stacked along a radial axis Z. Over a bottom portion of the vane in the range 0 to 50% of its total height, the leading edge of each section is in front of the leading edge of the corresponding section at the total height, and the maximum thicknesses are located at positions that are offset from the leading edge by at least 50% of the chord.

The paper by Carsten Clemen: "Aero-mechanical optimisation of a structural fan outlet guide vane", XP019912193, ISSN:1615-1488, DOI: 10.1007/S00158-010-0617-4 relates to the aero-mechanical optimisation of a fan outlet guide vane (OGV) in the bypass duct of a turbofan engine, and includes a graph showing combinations of thickness and chord.

According to a first aspect there is provided a gas turbine engine having the features of claim 1 and comprising a plurality of outlet guide vanes each having a length extending across a bypass duct of the gas turbine engine, wherein for each outlet guide vane a minimum thickness to chord ratio is less than 80% of a maximum thickness to chord ratio, and the thickness to chord ratio at a root of each guide vane, at an inner surface of the bypass duct, is between 0.06 and 0.08.

The maximum thickness to chord ratio of the guide vane may be at the inner or outer face of the bypass duct, corresponding to a root and tip respectively of the guide vane.

The thickness to chord ratio at any point along the length of an outlet guide vane may be defined by a ratio between a maximum thickness across the outlet guide vane and a maximum chord length across the outlet guide vane.

It will be appreciated that the thickness to chord ratio of the outlet guide vane varies along its length (or span). Thus, a cross-section through the outlet guide vane at a given spanwise position (or length between the root and tip) has a generally aerofoil shape having a thickness and chord defined in the conventional manner (i.e. the thickness is the maximum thickness of that cross-section). The thickness to chord ratio is thus defined for each cross-section through the vane using the local thickness and chord at that cross-section. Thus, the minimum thickness to chord ratio for the vane is defined at the cross-section for which the value of the local thickness divided by the local chord is a minimum. Similarly, the maximum thickness to chord ratio for the vane is defined at the cross-section for which the value of the local thickness divided by the local chord is a maximum.

The variation in thickness to chord ratio allows the OGVs of a gas turbine engine to provide more of a structural component for the engine, resulting in the ability to make the engine axially more compact. This may be achieved by thickening the root, and optionally the tip, of each OGV so that an increased loading, both axially and in torsion, can be applied to each vane. Thickening the tip in particular allows a stiffer interface between the outlet guide vane and an end attachment of the vane. A different type of joint may then be made with the outer casing of the bypass duct by bolting the end attachment to the outer casing, rather than by a conventional pin jointed attachment. By bolting the tip to the outer casing with a plurality of bolts, the connection between each vane and the outer casing can be made to support a greater torque loading between the inner and outer faces of the bypass duct. This may allow for structural supporting vanes to be omitted, and the entire torque loading to be transmitted via the guide vanes alone.

The minimum thickness to chord ratio of the guide vane may be at a position along the length of the guide vane of between around 85% and 95% from the inner to outer faces of the bypass duct. Varying the ratio in this way allows for an efficient way of increasing tangential stiffness of the vane for only a small detrimental effect in terms of aerodynamic loss, as the increase in thickness is concentrated towards the tip of the guide vane, in a region where there is greater room for the passage of air flow through the bypass duct.

At a root of each guide vane, i.e. at an inner surface of the bypass duct, the thickness to chord ratio may be between 0.065 and 0.075.

At a tip of each guide vane, i.e. at an outer surface of the bypass duct, the thickness to chord ratio may be between around 0.06 and 0.08, or optionally between 0.065 and 0.075.

In some embodiments, the minimum thickness to chord ratio over the length of each vane may be between around 65% and 75% of the maximum thickness to chord ratios.

A maximum thickness of each outlet guide vane may vary along the length of the outlet guide vane by more than 30% around a mean value of the maximum thickness of the outlet guide vane, and optionally may be between around 30% and 35% around the mean value.

The chord length of each outlet guide vane may vary along the length of the outlet guide vane by between about 15% and 25% around a mean value of the chord length for the outlet guide vane.

According to a second aspect there is provided a gas turbine engine of the first aspect for an aircraft, the gas turbine engine comprising:
an engine core comprising a turbine, a compressor, and a core shaft connecting the turbine to the compressor;
a fan located upstream of the engine core, the fan comprising a plurality of fan blades; and
a gearbox that receives an input from the core shaft and outputs drive to the fan so as to drive the fan at a lower rotational speed than the core shaft.

In the gas turbine engine, the turbine may be a first turbine, the compressor a first compressor, and the core shaft a first core shaft, the engine core further comprising a second turbine, a second compressor, and a second core shaft connecting the second turbine to the second compressor, the second turbine, second compressor, and second core shaft being arranged to rotate at a higher rotational speed than the first core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine; and
Figure 4 is a schematic plot of thickness to chord ratio for two example outlet guide vanes;
Figure 5 is a schematic plot of maximum thickness for the two example outlet guide vanes of Figure 4; and
Figure 6 is a schematic plot of chord length for the two example outlet guide vanes of Figure 4 and Figure 5

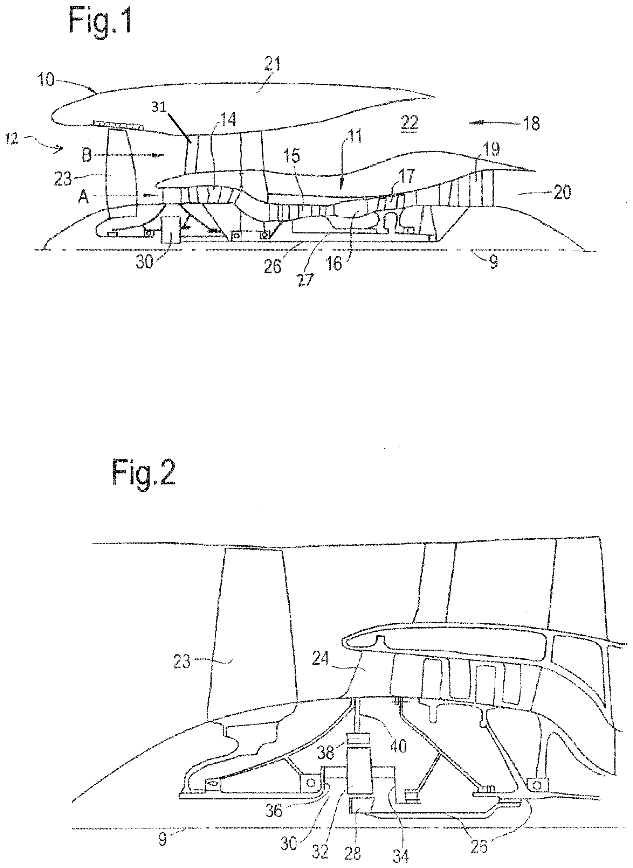

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

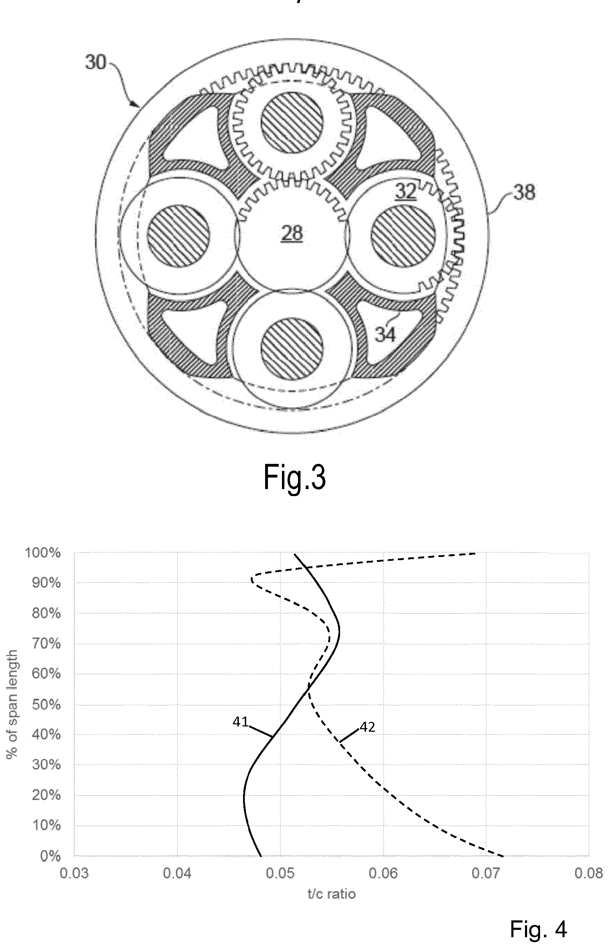

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

In a gas turbine engine 10 such as that illustrated in Figure 1, outlet guide vanes 31 are provided in the bypass duct 22 and function primarily to counteract rotational air movement in the bypass airflow B caused by rotation of the upstream fan blades 23. OGVs are therefore conventionally designed primarily based on aerodynamic rather than structural considerations, typically resulting in the vanes 31 being relatively thin at the root. Structural support across the bypass duct 22 may instead be provided by a number of structural support vanes. The ratio between the thickness and the chord dimensions of a typical guide vane will tend to vary along its length. An example is illustrated in Figure 4, in which the thickness to chord ratio 41 for a typical guide vane is shown. The ratio averages around 0.051 between the root and tip of the guide vane, with the ratio being a minimum of around 0.046 in the inner half of the length from the root to the tip and a maximum of around 0.056 in the outer half. The ratio from the root to the tip follows a roughly sinusoidal shape with a roughly linear offset making the ratio at the tip greater than that at the root. The ratio along the length of the guide vane as a result varies by no more than around +/-10% from the mean for this example.

Figure 4 also shows a plot 42 of the variation in thickness to chord ratio for an example vane according to the present disclosure. The ratio at the root, i.e. at 0% of the span length, is substantially greater than that for the conventional guide vane, being between around 0.065 and 0.075 compared to between 0.045 and 0.05 for the conventional guide vane. In a general aspect, the thickness to chord ratio at the root of the guide vane may be between around 0.06 and 0.08, and optionally between 0.065 and 0.075. The ratio at the tip may also be substantially greater that that towards the middle of the vane. In the illustrated example, the ratio at the tip is around 0.068. In a general aspect, the thickness to chord ratio at the tip of the guide vane may be between around 0.06 and 0.08, and optionally between 0.065 and 0.075.

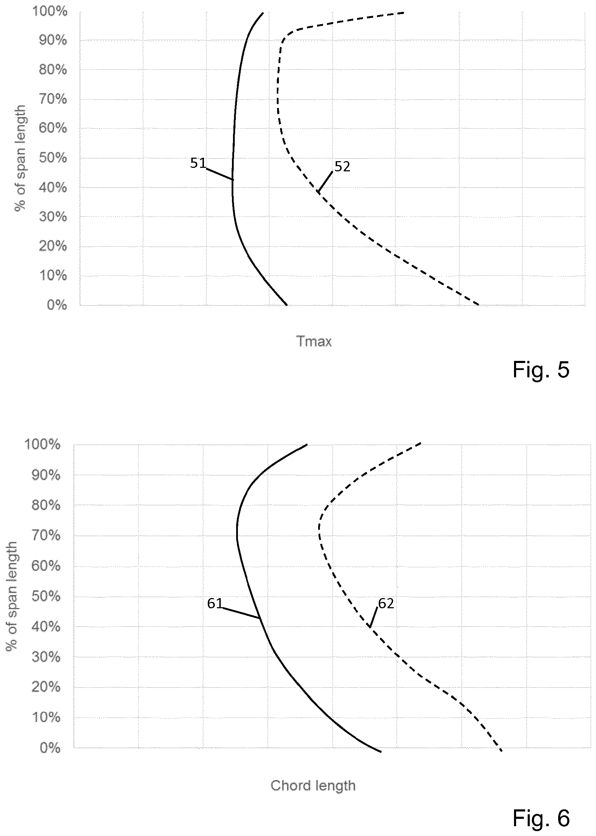

As also shown in Figure 4, the minimum thickness to chord ratio for the example guide vane is around 0.047 at around 90% of the thickness from the root to the tip. This results from the thickness being roughly constant between around 60% and 90% as shown in Figure 5, while the chord length reaches a minimum at around 70-75% and increases towards the tip of the vane, as shown in Figure 6. In a general aspect therefore, the minimum thickness to chord ratio over the length of the vane may be less than around 80% of the maximum ratio, optionally between around 60% to 80% of the maximum thickness to chord ratio, and further optionally between around 65% to 75% or between 65% and 70%. This compares with the minimum ratio of the conventional guide vane being around 85% of the maximum ratio, corresponding to substantially less variation in the thickness to chord ratio along the length of the vane.

The variation in thickness to chord length ratio may be primarily achieved by making the vane thickness substantially greater towards the root and tip, as shown in the plot of maximum vane thickness Tmax over the vane length in Figure 5, in which the typical example guide vane variation in thickness 51 is compared with the thickness 52 of the example according to the present disclosure. Whereas the conventional guide vane thickness 51 varies by about +/- 20% around a mean value, the example guide vane thickness 52 varies by about +/-33% around a mean value. The mean value may vary according to the particular application and size of engine in which the guide vanes are used. The chord length, on the other hand, as shown in Figure 6, varies across the length of the guide vanes by similar amounts to that in the conventional guide vane. The chord length 61 of the conventional guide vane varies by about +/- 20% around a mean value, and the chord length 62 of the example guide vane also varies by about +/- 20% around a mean value.

It will be understood that the invention is not limited to the embodiments above-described and various modifications and improvements can be made without departing from the concepts described herein.

## Claims

1. A gas turbine engine (10) comprising a plurality of outlet guide vanes (31) each having a length extending across a bypass duct (22) of the gas turbine engine (10), wherein:
for each outlet guide vane a minimum thickness to chord ratio is less than 80% of a maximum thickness to chord ratio; **characterised in that**:
the thickness to chord ratio at a root of each guide vane, at an inner surface of the bypass duct, is between 0.06 and 0.08

2. The gas turbine engine (10) of claim 1 wherein the maximum thickness to chord ratio of each outlet guide vane is at an inner face of the bypass duct.

3. The gas turbine engine (10) of claim 1 wherein the maximum thickness to chord ratio of each outlet guide vane is at an outer face of the bypass duct.

4. The gas turbine engine (10) of any preceding claim wherein each guide vane is bolted to an outer casing of the bypass duct with a plurality of bolts.

5. The gas turbine engine (10) of any preceding claim wherein a minimum thickness to chord ratio of each guide vane is at a position along the length of the outlet guide vane of between 85% and 95% from the inner to outer faces of the bypass duct.

6. The gas turbine engine (10) of any one of the preceding claims wherein the thickness to chord ratio at the root of each guide vane is between 0.065 and 0.075.

7. The gas turbine engine (10) of any preceding claim wherein the thickness to chord ratio at a tip of each guide vane, at an outer surface of the bypass duct, is between 0.06 and 0.08.

8. The gas turbine engine (10) of claim 7 wherein the thickness to chord ratio at the tip of each guide vane is between 0.065 and 0.075.

9. The gas turbine engine (10) of any one of the preceding claims wherein the minimum thickness to chord ratio over the length of each vane is between 65% and 75% of the maximum thickness to chord ratio

10. The gas turbine engine (10) of any preceding claim wherein a maximum thickness of each outlet guide vane varies along the length of the outlet guide vane by more than 30% around a mean value of the maximum thickness of the outlet guide vane.

11. The gas turbine engine (10) of claim 10 wherein the maximum thickness of each guide vane varies along the length of the outlet guide vane by between 30% and 35% around the mean value.

12. The gas turbine engine (10) of any preceding claim wherein the chord length of each outlet guide vane varies along the length of the outlet guide vane by between 15% and 25% around a mean value of the chord length for the outlet guide vane.

13. The gas turbine engine (10) of any preceding claim for an aircraft, the gas turbine engine comprising:
an engine core (11) comprising a turbine (19), a compressor (14), and a core shaft (26) connecting the turbine to the compressor;
a fan (23) located upstream of the engine core, the fan comprising a plurality of fan blades; and
a gearbox (30) that receives an input from the core shaft (26) and outputs drive to the fan so as to drive the fan at a lower rotational speed than the core shaft.

14. The gas turbine engine according to claim 13, wherein:
the turbine is a first turbine (19), the compressor is a first compressor (14), and the core shaft is a first core shaft (26);
the engine core further comprises a second turbine (17), a second compressor (15), and a second core shaft (27) connecting the second turbine to the second compressor; and
the second turbine, second compressor, and second core shaft are arranged to rotate at a higher rotational speed than the first core shaft.

## Patentansprüche

1. Gasturbinentriebwerk (10), das eine Mehrzahl von Leitschaufeln (31) umfasst, die jeweils eine Länge haben, die sich über einen Nebenstromkanal (22) des Gasturbinentriebwerks (10) erstreckt, wobei:
für jede Austrittsleitschaufel ein minimales Verhältnis der Dicke zur Sehne kleiner ist als 80% eines maximalen Verhältnisses der Dicke zur Sehne; **dadurch gekennzeichnet, dass** das Verhältnis der Dicke zur Sehne an einem Fuß jeder Leitschaufel an einer Innenseite des Nebenstromkanals zwischen 0,06 und 0,08 liegt.

2. Gasturbinentriebwerk (10) nach Anspruch 1, wobei das maximale Verhältnis der Dicke zur Sehne jeder Austrittsleitschaufel an einer Innenseite des Nebenstromkanals liegt.

3. Gasturbinentriebwerk (10) nach Anspruch 1, wobei das maximale Verhältnis der Dicke zur Sehne jeder Austrittsleitschaufel an einer Außenseite des Nebenstromkanals liegt.

4. Gasturbinentriebwerk (10) nach einem der vorstehenden Ansprüche, wobei jede Leitschaufel über eine Mehrzahl von Bolzen an einem äußeren Gehäuse des Nebenstromkanals befestigt ist.

5. Gasturbinentriebwerk (10) nach einem der vorstehenden Ansprüche, wobei ein minimales Verhältnis der Dicke zur Sehne jeder Leitschaufel an einer Position entlang der Länge der Austrittsleitschaufel zwischen 85% und 95% von den inneren zu den äußeren Seiten des Nebenstromkanals liegt.

6. Gasturbinentriebwerk (10) nach einem der vorstehenden Ansprüche, wobei das Verhältnis der Dicke zur Sehne an dem Fuß jeder Leitschaufel zwischen 0,065 und 0,075 liegt.

7. Gasturbinentriebwerk (10) nach einem der vorstehenden Ansprüche, wobei das Verhältnis der Dicke zur Sehne an einer Spitze jeder Leitschaufel, an einer äußeren Oberfläche des Nebenstromkanals, zwischen 0,06 und 0,08 liegt.

8. Gasturbinentriebwerk (10) nach Anspruch 7, wobei das Verhältnis der Dicke zur Sehne an der Spitze jeder Leitschaufel zwischen 0,065 und 0,075 liegt.

9. Gasturbinentriebwerk (10) nach einem der vorstehenden Ansprüche, wobei das minimale Verhältnis der Dicke zur Sehne über die Länge jeder Schaufel zwischen 65% und 75% des maximalen Verhältnisses der Dicke zur Sehne beträgt.

10. Gasturbinentriebwerk (10) nach einem der vorstehenden Ansprüche, wobei eine maximale Dicke jeder Austrittsleitschaufel entlang der Länge der Austrittsleitschaufel um mehr als 30% um einen mittleren Wert der maximalen Dicke der Austrittsleitschaufel variiert.

11. Gasturbinentriebwerk (10) nach Anspruch 10, wobei die maximale Dicke jeder Austrittsleitschaufel entlang der Länge der Austrittsleitschaufel um zwischen 30% und 35% um den mittleren Wert variiert.

12. Gasturbinentriebwerk (10) nach einem der vorstehenden Ansprüche, wobei die Sehnenlänge jeder Austrittsleitschaufel entlang der Länge der Austrittsleitschaufel um zwischen 15% und 25% um einen mittleren Wert der Sehnenlänge für die Austrittsleitschaufel variiert.

13. Gasturbinentriebwerk (10) nach einem der vorstehenden Ansprüche für ein Luftfahrzeug, wobei das Gasturbinentriebwerk folgendes umfasst:
einen Triebwerkskern (11), der eine Turbine (19), einen Kompressor (14) und eine Kernwelle (26) umfasst, welche die Turbine mit dem Kompressor verbindet;
einen Fan (23), der stromaufwärts des Triebwerkskerns angeordnet ist, wobei er Fan eine Mehrzahl von Fan-Flügeln umfasst; und
ein Getriebe (30), das eine Eingabe von der Kernwelle (26) empfängt und Antrieb an den Fan ausgibt, um den Fan mit einer geringeren Drehzahl als die Kernwelle anzutreiben.

14. Gasturbinentriebwerk nach Anspruch 13, wobei:
die Turbine eine erste Turbine (19) ist, der Kompressor ein erster Kompressor (14) ist, und die Kernwelle eine erste Kernwelle (26) ist;
der Triebwerkskern ferner eine zweite Turbine (17), einen zweiten Kompressor (15) und eine zweite Kernwelle (27) umfasst, welche die zweite Turbine mit dem zweiten Kompressor verbindet; und
wobei die zweite Turbine, der zweite Kompressor und die zweite Kernwelle so angeordnet sind, dass sie sich mit einer höheren Drehzahl drehen als die erste Kernwelle.

## Revendications

1. Moteur de turbine à gaz (10) comprenant une pluralité d'aubes directrices de sortie (31) ayant chacune une longueur s'étendant en travers d'un conduit de dérivation (22) du moteur de turbine à gaz (10) :
pour chaque aube directrice de sortie, un rapport épaisseur/corde minimum étant inférieur à 80 % d'un rapport épaisseur/corde maximum ; **caractérisé en ce que** :
le rapport épaisseur/corde à l'emplanture de chaque aube directrice, au niveau de la surface intérieure du conduit de dérivation, est compris entre 0,06 et 0,08.

2. Moteur de turbine à gaz (10) selon la revendication 1, le rapport épaisseur/corde maximum de chaque aube directrice de sortie se trouvant au niveau d'une face interne du conduit de dérivation.

3. Moteur de turbine à gaz (10) selon la revendication 1, le rapport épaisseur/corde maximum de chaque aube directrice de sortie se trouvant au niveau d'une face externe du conduit de dérivation.

4. Moteur de turbine à gaz (10) selon l'une quelconque des revendications précédentes, chaque aube directrice étant boulonnée à une enveloppe externe du conduit de dérivation avec une pluralité de boulons.

5. Moteur de turbine à gaz (10) selon l'une quelconque des revendications précédentes, un rapport épaisseur/corde minimum de chaque aube directrice se trouvant au niveau d'une position sur la longueur de l'aube directrice de sortie comprise entre 85 % et 95 % à partir des faces internes et externes du conduit de dérivation.

6. Moteur de turbine à gaz (10) selon l'une quelconque des revendications précédentes, le rapport épaisseur/corde au niveau de l'emplanture de chaque aube directrice étant compris entre 0,065 et 0,075.

7. Moteur de turbine à gaz (10) selon l'une quelconque des revendications précédentes, le rapport épaisseur/corde au niveau de l'extrémité de chaque aube directrice, au niveau d'une surface extérieure du conduit de dérivation, étant compris entre 0,06 et 0,08.

8. Moteur de turbine à gaz (10) selon la revendication 7, le rapport épaisseur/corde au niveau de l'extrémité de chaque aube directrice étant compris entre 0,065 et 0,075.

9. Moteur de turbine à gaz (10) selon l'une quelconque des revendications précédentes, le rapport épaisseur/corde minimum sur la longueur de chaque aube étant compris entre 65 % et 75 % du rapport épaisseur/corde maximum.

10. Moteur de turbine à gaz (10) selon l'une quelconque des revendications précédentes, une épaisseur maximum de chaque aube directrice de sortie variant sur la longueur de l'aube directrice de sortie de plus de 30 % autour d'une valeur moyenne de l'épaisseur maximum de l'aube directrice de sortie.

11. Moteur de turbine à gaz (10) selon la revendication 10, l'épaisseur maximum de chaque aube directrice variant sur la longueur de l'aube directrice de sortie entre 30 % et 35 % autour de la valeur moyenne.

12. Moteur de turbine à gaz (10) selon l'une quelconque des revendications précédentes, la longueur de corde de chaque aube directrice de sortie variant sur la longueur de l'aube directrice de sortie entre 15 % et 25 % autour d'une valeur moyenne de la longueur de corde pour l'aube directrice de sortie.

13. Moteur de turbine à gaz (10) selon l'une quelconque des revendications précédentes pour un aéronef, le moteur de turbine à gaz comprenant :
un noyau central (11) comprenant une turbine (19), un compresseur (14), et un arbre central (26) reliant la turbine au compresseur ;
un ventilateur (23) situé en amont du noyau central, le ventilateur comprenant une pluralité d'aubes de ventilateur ; et
une boîte de vitesses (30) qui reçoit une entrée de l'arbre central (26) et transmet l'entraînement au ventilateur de sorte à entraîner le ventilateur à une vitesse de rotation inférieure à celle de l'arbre central.

14. Moteur de turbine à gaz selon la revendication 13 :
la turbine étant une première turbine (19), le compresseur étant un premier compresseur (14), et l'arbre central étant un premier arbre central (26) ;
le noyau de moteur comprenant en outre une seconde turbine (17), un second compresseur (15) et un second arbre central (27) reliant la seconde turbine au second compresseur ; et
la seconde turbine, le second compresseur et le second arbre central étant disposés de sorte à tourner à une vitesse de rotation plus élevée que le premier arbre de noyau.
